Europäisches Patentamt

**European Patent Office**

**Office européen des brevets**

(11) Publication number: **0 394 565**
**A1**

# EUROPEAN PATENT APPLICATION

(21) Application number: **89201097.6**

(51) Int. Cl.5: **B60K 25/04, B60L 1/00**

(22) Date of filing: **27.04.89**

(43) Date of publication of application:
**31.10.90 Bulletin 90/44**

(84) Designated Contracting States:
**AT BE CH DE ES FR GB GR IT LI LU NL SE**

(71) Applicant: **Doleh, Zakaria Kalil**
**P.O. Box 1566**
**Dubai(AE)**

(72) Inventor: **Doleh, Zakaria Kalil**
**P.O. Box 1566**
**Dubai(AE)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) Vehicle.

(57) Vehicle with an air turbine (3) coupled to an electric generator (4) to generate electrical energy upon moving of the vehicle. The generated electrical energy is stored in an accumulator or fedback to a supply distribution system.

FIG.1

# VEHICLE

Many attempts have been undertaken to save energy consumption and to recover energy. These attempts have also been undertaken, for example in vehicles which are propelled by an internal combustion engine or by an electric motor, such as cars and trains. Trains being propelled by internal combustion engines, for example diesel trains, also need electrical energy for lighting and other electrical apparatuses. For generating electrical energy complicated devices are necessary which should be constructed such that during standstill electrical energy will be supplied.

According to the invention a vehicle, for example a train or a motor vehicle, is provided with an air intake, an air turbine connected to the air intake, an electric generator coupled to the shaft of the turbine and an electrical accumulator connected to the generator.

During operation, that is when the vehicle is moving, an airstream will be developed, especially in case of high speed trains, which will rotate the air turbine. The electrical energy generated by the generator will be accumulated in an accumulator such as a battery. This accumulated electrical energy can be used during operation of the vehicle or during standstill of the vehicle to supply electrical energy to the electric devices. Complicated additional devices necessary for generating electrical energy during standstill can be avoided.

An intake of a second turbine can be coupled to the outlet of the turbine in order to make further use of the energy from the airstream for generating electrical energy.

The invention will be elucidated with the help of the drawing.

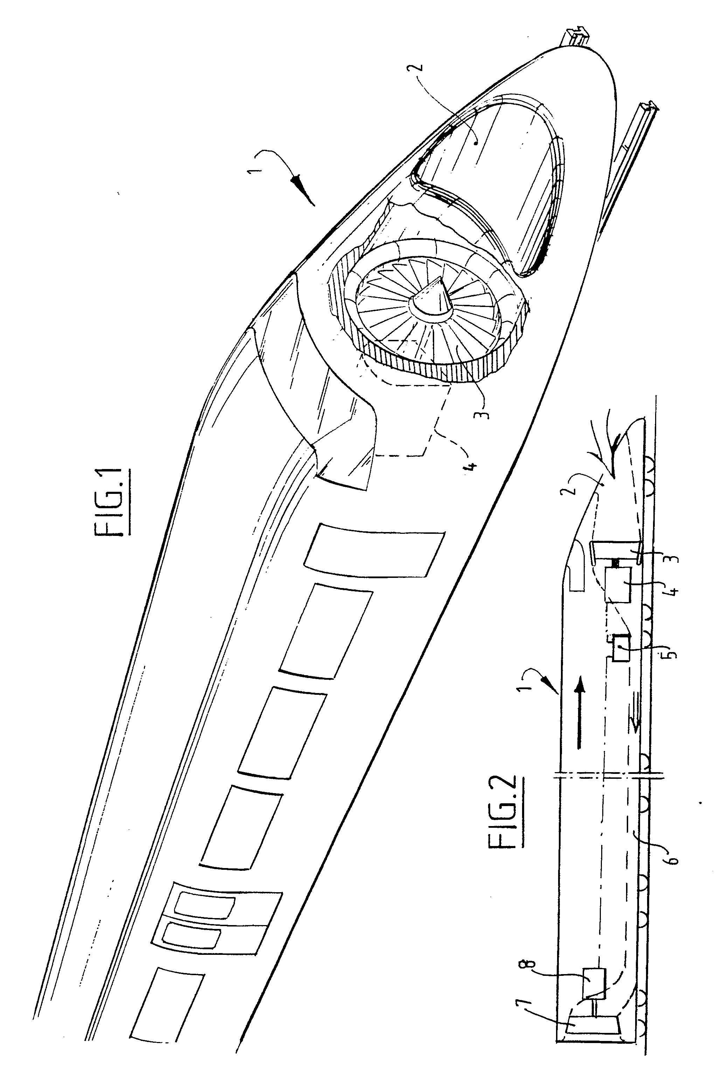

Figure 1 shows a train according to the invention in isometric view, and

figure 2 shows a longitudinal section through the train according to figure 1.

The vehicle in the form of a train 1 is provided with an intake 2 at the front side, which is coupled to the rotor 3 of an air turbine. The shaft of the turbine is connected to a generator 4 for generating electrical energy. The generated electrical energy is accumulated in an accumulator, such as a battery 5. The outlet of the turbine can be connected to the rotor of the second turbine 7 through a conduit 6, which rotor is also coupled to a generator 8. This generator can also supply energy to the accumulator 5.

It is also possible to supply the generated energy to the distribution system from which the train is driven. The above described system can also be applied on other moving vehicles.

## Claims

1. Vehicle, for example train or car, having an air intake, a rotating turbine connected to the air intake, an electrical generator connected to the shaft of the turbine and an electrical accumulator connected to the generator.

2. Vehicle according to claim 1, characterised in that the vehicle is an electrical driven train and that the accumulators are connected to means to supply electrical energy in the electrical distribution system.

3. Vehicle according to claims 1-2, characterised in that a second turbine is connected to the outlet of the first turbine and in that the shaft of the second turbine is also connected to an electric generator.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 168 759 (R. DELL HULL) * column 1, line 59 - column 2, line 3 * | 1 | B 60 K   25/04 B 60 L   1/00 |
| A | | 2 | |
| X | CH-A-   44 303  (E. OTT) * whole document * | 1 | |
| A | | 2 | |
| X | GB-A-2 126 963  (R.S. BRIERLEY) * abstracr; pages 22,26 of figures * | 1 | |
| A | | 3 | |
| X | US-A-4 314 160  (L. BOODMAN et al.) * abstract; figure 1 * | 1 | |

TECHNICAL FIELDS SEARCHED (Int. Cl.5)

B 60 K
B 60 L

The present search report has been drawn up for all claims

| Place of search | Date of completion of the search | Examiner |
|---|---|---|
| BERLIN | 04-12-1989 | KRIEGER P O |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P0401)